# EUROPÄISCHE PATENTSCHRIFT

(11) **EP 2 553 428 B1**
(45) Veröffentlichungstag und Bekanntmachung des Hinweises auf die Patenterteilung: **10.02.2016**
(21) Anmeldenummer: 11710506.4
(22) Anmeldetag: 28.03.2011
(51) Int. Cl.: G01N 21/49, G01B 11/25, G02B 21/00, G01N 21/25, G01B 11/24, A61C 19/00

(54) **VERFAHREN ZUR ERMITTLUNG VON MATERIALCHARAKTERISTIKA EINES OBJEKTS**
METHOD FOR ASCERTAINING MATERIAL CHARACTERISTICS OF AN OBJECT
PROCÉDÉ DE DÉTERMINATION DE CARACTÉRISTIQUES MATÉRIELLES D'UN OBJET

(30) Priorität: 16.07.2010 DE 102010036447; 11.05.2010 DE 102010016904; 26.03.2010 DE 102010016174
(43) Veröffentlichungstag der Anmeldung: 06.02.2013
(73) Patentinhaber: DeguDent GmbH, 63457 Hanau (DE)
(72) Erfinder: ERTL, Thomas, 63691 Ranstadt (DE)
(74) Vertreter: Stoffregen, Hans-Herbert
(86) Internationale Anmeldenummer: PCT/EP2011/054738
(87) Internationale Veröffentlichungsnummer: WO 2011/117420

(56) Entgegenhaltungen:
- EP-A1- 1 221 597
- WO-A1-2008/104913
- DE-A1-102007 019 267
- US-A1- 2009 021 750

## Beschreibung

Die Erfindung bezieht sich auf ein Verfahren zum Ermitteln von Materialcharakteristika eines Objekts, die optische Eigenschaften des Objekts sind und ermittelt werden, indem mit einem konfokalen 3D-Messsystem spektral aufgelöste Messdaten des Objekts ermittelt werden.

Beim optischen Vermessen dreidimensionaler Objekte kann es aus mehreren Gründen sinnvoll sein, die Materialeigenschaften, insbesondere die optischen Eigenschaften des zu vermessenden Bereichs zu kennen. Dies betrifft sowohl Daten der Oberfläche als auch im Falle semitransparenter Objekte Informationen über Materialeigenschaften im Volumen.

Beispielsweise kann es bei Objekten, die aus verschiedenen Materialien zusammengesetzt sind, sinnvoll sein, diese auch im 3D-Datensatz unterschiedlich darzustellen, oder um materialabhängige Filteralgorithmen anzuwenden. Ebenso können spezielle Filter (resp. Algorithmen zur Datenhandhabung) selektiv auf Materialgrenzen innerhalb eines zu scannenden Objekts angewendet werden, wenn der Verlauf der Trennlinie bekannt ist.

Weiterhin kann es bei geometrieinvarianten Objekten, die in einer Umgebung mit variabler Geometrie eingebettet sind, sinnvoll sein, die Objekte anhand ihrer unterschiedlichen optischen Eigenschaften zu trennen, sofern diese vorhanden sind.

Neben der Nutzung der Materialeigenschaften für die 3D-Rekonstruktion kann die Bestimmung der Materialeigenschaften auch z. B. zur Darstellung der Materialkompartimente oder im Dentalbereich zur Erkennung von Karies, Entzündungen oder dem Zustand (Farbe, Polymerisationsgrad) von Kompositfüllungen verwendet werden.

Aus der DE-A-10 2007 019 267 ist eine 3D-Messung insbesondere eines semitransparenten Objekts mittels chromatisch dispersiver konfokaler Technik bekannt. Die gemessenen Spektraldaten werden jedoch zur Bestimmung der z-Koordinate einer Vielzahl von Messpunkten genutzt. Dementsprechend erfolgt die Bestimmung der z-Koordinate materialunabhängig. Bekannt sind ebenso die spektralen Remissionsdaten und optischen Eigenschaften von verschiedenen Materialien (WO-A-2005/068953).

Die US-A-2010/0033719 (WO-A-2008/104913) bezieht sich auf ein Verfahren und eine Vorrichtung zum Ermitteln von optischen Eigenschaften von Geweben. Hierzu werden punktuell aus unterschiedlichen Bereichen des Gewebes spektrale Aufnahmen mittels konfokaler Spektroskopie ermittelt, um sodann Aussagen über Reflexions- und Absorptionseigenschaften des Gewebes zu erzielen.

Gegenstand der DE-A-10 2006 007 172 sind ein Verfahren und eine Anordnung zur schnellen, ortsaufgelösten, flächigen, spektroskopischen Analyse eines Objekts. Dabei wird ein gerastertes, flächiges Array von Pinholes verwendet.

Aus der US-A-2009/0021750 sind ein Verfahren und eine Anordnung zur schnellen und robusten chromatischen konfokalen 3D-Messtechnik zu entnehmen, um in verschiedenen Tiefen eines Objektraums die Objektform wie Zahn ermitteln zu können.

Der vorliegenden Erfindung liegt die Aufgabe zu Grunde, ein Verfahren zur Ermittlung von Materialcharakteristika, insbesondere optischen Eigenschaften von Objekten, vorzugsweise solchen im Dentalbereich zur Verfügung zu stellen, ohne dass aufwendige Messverfahren erforderlich sind. Auch soll mit konstruktiv einfachen Messgeräten gearbeitet werden können, die eine einfache Handhabung ermöglichen.

Zur Lösung der Aufgabe sieht die Erfindung im Wesentlichen vor, dass ein konfokales 3D-Messsystem verwendet wird, und dass die mit dem konfokalen 3D-Messsystem ermittelten spektral aufgelösten Messdaten des Objekts mit spektral aufgelösten Daten eines Referenzkörpers verrechnet werden, wobei von gleichen Messpunkten mehrere spektral aufgelöste Daten ermittelt werden, indem das 3D-Messsystem zum Objekt in voneinander abweichenden Abständen von dem Messpunkt Spektren aufnimmt und speichert und die gemessenen spektral aufgelösten Daten des Messpunktes mit einem Korrekturfaktor beaufschlagt werden, der aus Spektren des Referenzkörpers ermittelt wird, dessen Remission ohne konfokale Messbedingungen gemessen wird oder dessen Spektren einer in einem Rechner abgelegten Bibliothek entnommen werden, wobei die Messspektren unter Berücksichtigung des Korrekturfaktors mit in Look-Up Tabellen abgelegten Spektren verglichen werden, die repräsentativ für Materialcharakteristika sind.

Bei dem konfokalen 3D-Messsystem handelt es sich insbesondere um ein konfokales farbdispersives 3D-Messsystem, wie dieses der DE-A-10 2007 019 267 zu entnehmen ist, auf deren Offenbarung ausdrücklich und vollinhaltlich Bezug genommen wird.

Als Referenzkörper wird insbesondere ein solcher aus einem hochdiffus streuenden Material wie Titandioxid oder Spektralon verwendet.

Erfindungsgemäß nutzt man die durch das optische Prinzip eines 3D-Scanners spektral aufgelösten Daten je Messpunkt, um die Kenntnis zur Materialcharakterisierung und -differenzierung zu nutzen, sofern sich die Materialien in ihren optischen Eigenschaften wie Brechungsindex, Anisotropiefaktor, Streu- und Absorptionskoeffizient oder auch durch Fluoreszenz voneinander unterscheiden.

Hierzu wird entsprechend der DE-A-10 2007 019 267 zumindest eine Lichtquelle, insbesondere eine Lichtquelle mit einem kontinuierlichen Spektrum, eine Einrichtung zur Erzeugung eines multifokalen Beleuchtungsmusters, ein Objektiv mit großer chromatischer Aberration zur Abbildung von Foki des Beleuchtungsmusters auf das Objekt, eine Detektiereinrichtung zur Ermittlung der Wellenlängenspektren der auf das Objektiv des Objekts abgebildeten Foki benutzt wird, wobei aus dem jeweiligen Wellenlängenspektrum spektrale Peaklage eines jeden Fokus bestimmt wird, aus der die Erstreckung des Objekts in Richtung des Abbildungsstrahls (Z-Koordinaten) berechnet wird. Dabei ist in der Ebene der konfokal über das Objektiv abgebildeten Foki ein erstes Lochmuster mit ersten Löchern angeordnet, deren geometrische Anordnung mit der des multifokalen Beleuchtungsmusters korreliert.

Durch die Positionen der ersten Löcher werden die Positionen der Foki auf dem Objekt in einer senkrecht zum Abbildungsstrahl verlaufenden Ebene (X, Y-Koordinaten) vorgeben, wobei die Wellenlängenspektren der in den Löchern abgebildeten Foki von der Detektiereinrichtung erfasst werden. Dabei wird das Wellenlängenspektrum eines jeden in einem Loch abgebildeten Fokus über eine nachgeordnete dispersive Einrichtung lateral aufgespreizt. Ferner sind den ersten Löchern des Lochmusters zweite Löcher zugeordnet, wobei die zweiten Löcher in ihrer Anordnung von der des multifokalen Beleuchtungsmusters abweichen. Somit treffen auf die zweiten Löcher diffuse Rückstrahlsignale; denn die Foki werden über das Objektiv nicht in die zweiten Löcher abgebildet. Somit kann als Messmethodik sowohl der direkte Rückreflex im Messpunkt (bei passendem Winkel inklusive Fresnelanteil), im Falle eines semitransparenten Objekts überlagert mit einem diffusen Rückstrahlsignal aus der nahen Umgebung des Messpunkts innerhalb der Messapertur als auch die räumlich versetzte Betrachtung des Rückstreusignal um einen kleinen Abstand im Bereich von z. B. 5 µm bis 3 mm, vorzugsweise 10 µm bis 200 µm oder die Kombination beider Signale verwendet werden.

Durch den direkten Rückreflex, also die remittierte Strahlung von einem der abgebildeten Foki, können insbesondere Rückschlüsse auf die Rauigkeit, also diffus streuende Eigenschaften des Materials geschlossen werden; denn starke Fresnelreflexe werden nur dort erfasst, wo eine geringe Rauigkeit vorliegt. Von den von den unbeleuchteten Punkten ermittelten Spektren können sodann Aussagen über Volumenstreuung getroffen werden.

Durch die konfokale Bedingung und die farbdispersive Optik dominiert bei jeder Z-Tiefe ein schmaler Wellenlängenbereich. Andere Wellenlängenbereiche werden unterdrückt. Bei bekannter Z-Tiefe der 3D-Messung kann dieser Effekt herausgerechnet werden, da das Verhalten der konfokalen Optik bekannt ist. Allerdings führt diese für die Tiefenmessung essentielle Eigenschaft bei der Bewertung der Materialeigenschaften zu einer Verschlechterung des Signal/Rauschverhältnisses in den unterdrückten Wellenlängenbereichen bzw. zu einer Einschränkung des nutzbaren Spektralbereichs.

Daher wird erfindungsgemäß vorgeschlagen, dass mehrere Spektren für den gleichen Messpunkt, aber in unterschiedlichen Abständen der Meßeinrichtung zu dem Objekt ermittelt werden, um sodann die Spektren zu wichten bzw. den Mittelwert aus diesen zu berechnen. Hierdurch lässt sich das ungünstige Signal-Rauschverhältnis verbessern.

Zu beachten ist auch, dass bestimmte Eigenschaften im Spektrum, wie beispielsweise eine Schieflage des Peaks durch andere Einflüsse als die Materialeigenschaften, wie beispielsweise eine Schräglage der Oberfläche, hervorgerufen werden können. Dies ist einer besonderen Bewertung zu unterziehen, um fehlerhafte Rückschlüsse auf die zu bestimmenden Materialeigenschaften zu vermeiden.

In weiterer hervorzuhebender Ausgestaltung der Erfindung ist vorgesehen, dass eine zusätzliche optische, nicht konfokale Messung zur Bestimmung von Materialeigenschaften erfolgt. Dies kann bei der bekannten und der DE-A-10 2007 019 267 zu entnehmenden Vorrichtung mit Hilfe der die Erstellung eines Live-Bilds ermöglichenden Mittel durchgeführt werden.

Bei Vorliegen eines oder mehrerer additiven/r, nicht konfokalen/r Referenzkanals /kanäle, beispielsweise für die Realisierung eines Live-Bilds während der 3D-Vermessung, kann /können diese(r) in der Bestimmung des Materials aus den optischen Eigenschaften mit verwendet werden.

Die vollflächige Beleuchtung des Messobjekts kann über eine oder mehrere zusätzliche Lichtquellen erfolgen. Liegt der Wellenlängenbereich der zusätzlichen Lichtquelle/n außerhalb des Wellenlängenbereichs des 3D-Messsystems, erreicht man eine weitgehende Unabhängigkeit der beiden Messsysteme. Alternativ können beide Systeme alternierend messen. Mehrere Wellenlängen im Referenzkanal können vorzugsweise mit zeitversetztem alternierendem Einschalten verschiedener LEDs oder Laserdioden realisiert werden. Die Tastung der Lichtquellen ist mit der Bildwiederholrate des Messsensors synchronisiert. Im Falle zweier Lichtquellen wird somit jedes zweite Bild mit der gleichen Wellenlänge beleuchtet.

Als Sensor kann entweder, insbesondere bei sequentieller Beleuchtung mit mehreren Lichtquellen, ein monochromer Sensor oder ein Farbsensor, z. B. RGB-Chip, verwendet werden. Möglich sind auch mehrere monochrome Sensoren in Kombination mit geeigneten Farbteilern.

Der zusätzliche bildgebende Sensor kann entweder mit eigenem Objektiv durch Strahlauskopplung vor dem chromatischen Objektiv positioniert sein, oder nach diesem, unter Verwendung des chromatischen Objektivs für die Abbildung. Auch ist eine zweite Messung mit eigener optischer Abbildung, die nicht koaxial zu derer des chromatischen Objektivs liegt, möglich.

Wird das chromatische Objektiv zur Abbildung verwendet, kann entweder der Farbsensor so positioniert sein, dass eine Wellenlänge scharf abgebildet wird und die Strukturauflösung liefert. Die anderen Wellenlängen liefern die spektrale Information, jedoch mit verminderter räumlicher Auflösung. Oder es werden mehrere monochrome Sensoren in Kombination mit geeigneten dichroitischen Filtern verwendet, wobei vorzugsweise, entsprechend der Dispersion des chromatischen Objektivs, die einzelnen axialen Positionen der Sensoren auf die jeweiligen Abbildungsebenen abgestimmt sind.

Wahlweise kann auch ein monochromer Sensor mit höherer Bildrate verwendet werden. Beispielsweise können drei LEDs mit der Framerate synchronisiert werden. Das erste Bild gibt mit scharfer Abbildung die Strukturauflösung, die folgenden Bilder tragen zur Farbbestimmung bei. Maßgebend für die Endauflösung ist hierbei die unschärfste Abbildung. Die effektive, einstellbare Framerate reduziert sich durch die Anzahl der Farbkanäle. Denn es gilt: effektive Framerate = Framerate dividiert durch Anzahl der Farbkanäle.

Je nach Anwendung kann anstelle der Variation der Beleuchtungswellenlänge eine Kombination aus Weißlichtquelle und Filterrad gewählt werden.

Selbstverständlich kann unter Verwendung geeigneter Filter in den Referenzkanälen auch eine Fluoreszenzauswertung genutzt werden.

Oberflächenrauigkeit bzw. Glattheit der Oberfläche können ggf. über mehrere Frames also Bilder bestimmt werden, da der Fresnelreflex nur bei Orthogonalität von Messoberfläche und optischer Achse des Messsystems auftritt und diese Bedingung nur sporadisch während des Scannens erfüllt ist. Durch das Matchen - auch Registrieren genannt - mehrerer Aufnahmen des Objektes - vorzugsweise werden 30 Frames pro Sekunde aufgenommen -, können die Repräsentanten einzelner Oberflächenpunkte auf dem Sensor einzelner Scans zusammengeführt werden, wobei der Beleuchtungs- und Blickwinkel unterschiedlich sein wird, da der Scanner bewegt wird. Ungeachtet dessen ist jedoch bei jedem Frame davon auszugehen, dass eine Relativbewegung zwischen Messgerät und Objekt nicht erfolgt, da ein Frame ungefähr 35 ms dauert. Ergeben sich bei einzelnen Frames starke Helligkeitsschwankungen in mindestens einem Messpunkt in direktem Rückreflex, kann von einer glatten Oberfläche in dem jeweiligen Bereich ausgegangen werden. Selbstverständlich kann die Lagebeziehungsfindung auch durch Inertialplattformen am Sensor und Messobjekt erfolgen.

Insbesondere ist vorgesehen, dass zur Ermittlung der spektral aufgelösten Daten das Objekt mittels des 3D-Messsystems mit einer ersten Strahlung beaufschlagt wird, die im Wellenlängenbereich Δλ1 liegt, dass das Objekt mit einer zweiten Strahlung in einem Wellenlängenbereich Δλ2 beaufschlagt wird und dass aus von dem Objekt emittierter zweiter Strahlung ein 2D-Bild des Objekts ermittelt wird, wobei insbesondere Δλ1 ≠ Δλ2 ist. Dabei ist vorgesehen, dass das 3D-Messsystem einen ersten Sensor mit Ortskoordinaten des Objekts zuzuordnen ersten Pixeln und das 2D-Bild mittels eines zweiten Sensors mit Ortskoordinaten des Objekts zuzuordnenden zweiten Pixeln aufweist und dass die ersten und zweiten Pixel einander zugeordnet werden. Somit ist eine eindeutige Zuordnung zwischen Raumkoordinaten und Materialeigenschaften möglich, wobei insbesondere mittels der remittierten Strahlung im Wellenlängenbereich Δλ2 Aussagen über die Autofluoreszenz des Materials des Objektes gewonnen werden.

Nach der Erfindung ist vorgesehen, dass die gemessenen Spektren mit einem Korrekturfaktor beaufschlagt werden, der aus Spektren eines Referenzkörpers ermittelt wird, dessen Remission ohne konfokale Messbedingungen gemessen wird, oder dessen Spektren einer in einem Rechner abgelegten Bibliothek entnommen werden.

Dabei ist vorgesehen, dass die Messspektren unter Berücksichtigung des Korrekturfaktors mit in Look-Up Tabellen abgelegten Spektren verglichen werden, die repräsentativ für Materialcharakteristika sind.

Vorzugsweise ist des Weiteren vorgesehen, dass sowohl aus einem unter konfokalen Bedingungen ermittelten Messspektrum eines Messpunkts als auch aus einem Untergrundspektrum in der Nähe des Messpunkts Materialcharakteristika ermittelt werden.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer 3D-Messanordnung,
- Fig. 2: eine Lochanordnung mit ersten und zweiten Löchern,
- Fig. 3: eine Prinzipdarstellung zur Ermittlung von Materialeigenschaften eines Objekts,
- Fig. 4: eine Abwandlung der Anordnung gemäß Fig. 1,
- Fig. 5: eine Prinzipdarstellung zur Ermittlung von Materialdaten,
- Fig. 6: Spektren zur Ermittlung von Korrekturfaktoren,
- Fig. 7: Spektren zur Ermittlung von Materialcharakteristika eines Objekts und
- Fig. 8: Spektren aufgenommen mit einer erfindungsgemäßen Messanordnung in den Abständen Z₁ und Z₂ zu einem zu messenden Objekt.

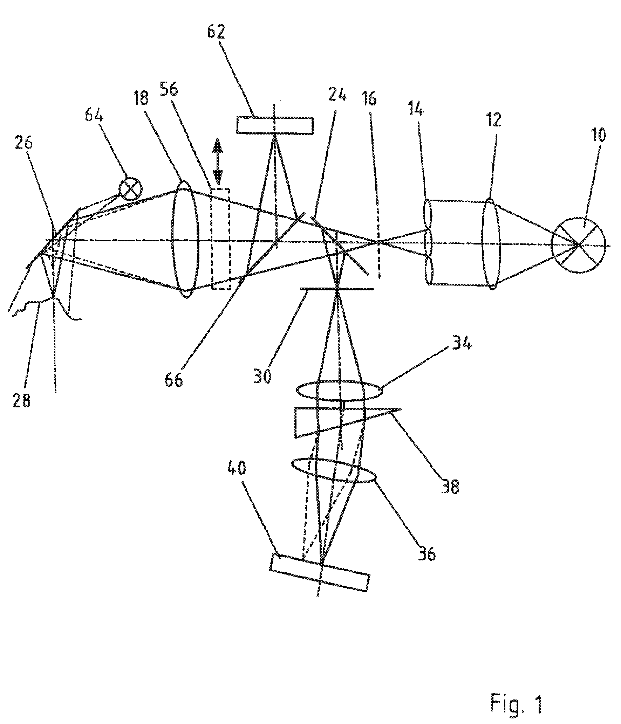

Erfindungsgemäß werden anhand von Daten eines jeden Messpunktes von einer Vielzahl gleichzeitig aufgenommener Messpunkte, die Informationen über die Oberflächengeometrie eines Objekts, wie insbesondere semitransparenten Objekts wie Zahn- oder Kieferbereich, zur Verfügung stellen, gleichzeitig Materialeigenschaften des Objektes ermittelt, und zwar unter Auswertung der spektral aufgelösten Daten, die die Raumkoordinaten des Objektes liefern. Dabei wird auf eine Vorrichtung zurückgegriffen, wie diese der DE-A-10 2007 019 267 zu entnehmen ist, auf deren Offenbarung erwähntermaßen ausdrücklich Bezug genommen wird. Die Messanordnung der Fig. 1 entspricht daher auch der der DE-A-10 2007 019 267.

Die Messanordnung umfasst dabei als wesentliche Elemente eine Lichtquelle 10 wie Halogenlampe, deren Licht über eine Linse 12 kollimiert wird. Der kollimierte Lichtstrahl fällt auf ein Mikrolinsen-Array 14, welches ein Beleuchtungsmuster 16 in einer Fokusebene eines Objektivs 18 großer chromatischer Aberration abbildet.

Das Beleuchtungsmuster kann z. B. eine Größe von 20 mm x 15 mm mit ca. 1600 Foki oder z. B. eine Größe von 5 mm x 6,5 mm mit ca. 2000 Foki im Abstand von 250 µm aufweisen, das durch das Mikrolinsen-Array 14 erzeugt wird.

Das Beleuchtungsmuster 16 kann derart konzipiert sein, dass sich ein Durchmesser der Foki 20, 22 von jeweils ca. 25 µm oder ca. 12 µm ergibt.

Zur Verbesserung der Beleuchtungsstruktur kann das Mikrolinsen-Array 14 mit einem darauf abgestimmten Pinhole-Array kombiniert werden, das sich in der Objektebene des Objektivs 18 befindet. Dabei sind die Löcher des Pinhole-Arrays auf das Beleuchtungsmuster, das durch die Foki gebildet wird, geometrisch bzw. lagemäßig abgestimmt.

Entsprechend der Darstellung der Fig. 1 fällt das von der Lichtquelle 10 stammende Licht nach dem Beleuchtungsmuster 16 auf einen Strahlteiler 24, von dem der transmittierte Anteil auf das Objektiv 18 mit starker chromatischer Aberration fällt.

Der Strahlteiler 24 ist entsprechend der zeichnerischen Darstellung als Platte mit einer teilreflektierenden Schicht dargestellt. Alternativ sind andere strahlteilende Elemente möglich. Beispielsweise sind Strahlteilerwürfel zu nennen. Auch ein ringförmiger Spiegel oder ein kleinerer Spiegel ist denkbar, wobei jeweils der äußere oder innere Strahlanteil zur nachstehend zu erläuternden Detektion oder zur Beleuchtung dient.

Die das Objektiv 18 durchsetzende Strahlung wird über eine Umlenkeinrichtung 26 wie Umlenkspiegel auf ein zu messendes Objekt 28 wie Zahn abgebildet. Dabei ist der Abstand zwischen der Ebene des Beleuchtungsmusters 16 und dem Objekt 28 so gewählt, dass die Foki nach der Umlenkung über die Umlenkeinrichtung 26 auf die Oberfläche des Objekts 28 abgebildet werden, wobei je nach Abstand der Objektoberfläche zum Objektiv 18 eine andere Farbe, d. h. Wellenlänge, scharf abgebildet wird. Der gewählte Abbildungsmaßstab bestimmt dabei die Größe des Messfeldes und die Auflösung.

Die von dem Objekt 28 remittierte Strahlung bzw. das Licht fällt zum Teil in das Objektiv 18 zurück und nach teilweiser Reflexion am Strahlteiler 24 auf ein erstes Lochmuster oder Pinhole-Array 30, dessen Löcher bzgl. des Abstands der Löcher zueinander, der Größe und der geometrischen Anordnung insgesamt dem des Beleuchtungsmusters 16 entspricht.

Mit anderen Worten ist die axiale und laterale Lage des Pinhole-Arrays 30, d.h. dessen Löcher so gewählt, dass die Foki auf der Oberfläche des Objekts 28 konfokal in die Löcher des Pinhole-Arrays 30 abgebildet werden. Somit wird durch jedes Loch des Pinhole-Arrays 30 die X-, Y-Koordinate des abgebildeten Fokus auf der Oberfläche des Objekts 28 vorgegeben.

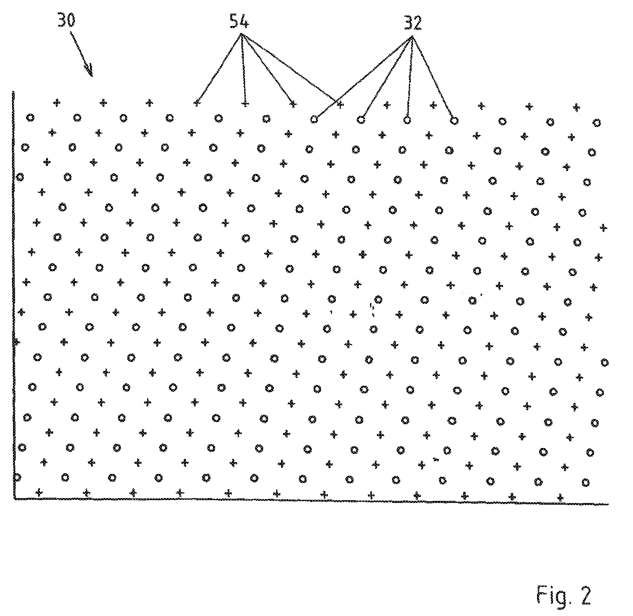

In Fig. 2 ist das Pinhole-Array 30 wiedergegeben, in dem die offenen Kreise 32 in ihrer Anordnung und Erstreckung dem Muster der Foki des Beleuchtungsmusters 16 entsprechen.

Durch die starke chromatische Aberration des Objektivs 18 wird in dem jeweiligen durch die Lage der Foki des Beleuchtungsmusters 16 vorgegebenen Messpunkte entsprechend deren Abstände zum Objektiv 18 jeweils nur eine bestimmte Farbe scharf abgebildet, d.h. nur eine bestimmte Wellenlänge erfüllt die konfokale Bedingung. Entsprechend tritt im Spektrum des durch das jeweilige Loch 32 des Pinhole-Arrays 30 transmittierten Lichts bei dieser Wellenlänge ein Intensitätsmaximum auf.

Mit zunehmender Dichte der Messpunkte und mit zunehmender Lichtstrahlung des Objekts 28 fällt neben der Peak-Wellenlänge auch ein zunehmender Weißlichtanteil durch das Loch bzw. das Pinhole. Um ungeachtet dessen die für den Fokus charakteristische Peak-Wellenlänge in hinreichendem Umfang und mit der notwendigen Genauigkeit zu ermitteln, ist vorgesehen, dass dem Pinhole-Array 30 eine auf das Beleuchtungsmuster 16 und damit dem Lochmuster des Pinhole-Arrays 30 abgestimmte spektrometrische Anordnung nachgeordnet ist, die im Ausführungsbeispiel aus Optiken 34, 36 und einem zwischen diesen angeordneten spektraldispersiven Element besteht, das im Ausführungsbeispiel ein Prisma 38 ist.

Über die Optiken 34, 36, die aus einer oder mehreren Linsen bestehen können, wird das Pinhole-Array 30 auf einen CCD-Flächensensor als Detektiereinrichtung 40 abgebildet. Das spektraldispersive Element, also das Prisma 38 bewirkt eine laterale spektrale Aufspreizung des in den Löchern mit Intensitätsmaximum auftretenden Wellenlängenbereichs des Lichts des Fokus, so dass folglich jedes Loch des Pinhole-Arrays 30 auf eine Linie auf dem CCD-Flächensensor 40, also den in einer Fläche angeordneten Pixeln abgebildet wird, wobei - wie bei einem Zeilenspektrometer - die Position entlang dieser Linie mit einer bestimmten Wellenlänge korreliert. Dabei wird die aus den Optiken 34, 36 und dem Prisma 30 bestehende spektraldispersive Einheit und der CCD-Sensor 40 derart zu dem Pinhole-Array 30 ausgerichtet, dass die lateral aufgespreizten Spektrallinien von aufeinander folgenden Löchern des Pinhole-Arrays 30, die folglich Linien auf den Pixeln bilden, ohne oder nahezu ohne Freiräume ineinander übergehen, ohne dass eine Überlappung erfolgt.

Wird beispielhaft das oben angegebene Beleuchtungsmuster mit den angegebenen Dimensionierungen gewählt und ein CCD-Chip oder Kamera-Chip mit einer Größe 6,4 mm x 4,8 mm mit 1 Mio. Pixel (Pixelgröße 6,7 µm x 6,7 µm), so stehen pro Messpunkt 186 Pixel für die spektrale Aufspreizung zur Verfügung. Bei einer Linienbreite von 2 Pixel, entsprechend dem Pinhole-Durchmesser, wird so für jeden der ca. 2000 Messpunkte und ca. 2000 Untergrundpunkte ein Zeilenspektrometer mit jeweils 93 Elementen für die spektrale Aufspreizung realisiert. Nach Bildaufnahme erfolgt die Auswertung der Bildinformation bzw. der Messdaten entweder bereits auf dem CCD-Sensor oder auf einer externen Einheit. Hierzu wird in jedem Messpunkt durch einen geeigneten Algorithmus die spektrale Peaklage und daraus der Abstand jedes Messpunkts zum Objekt 28 ermittelt. Mit einem Bild erhält man so die dreidimensionale Struktur des Objekts 28 in den Stützstellen oder Messpunkten, wobei die Auflösung von dem gewählten Abstand der Foki zueinander und dem Abbildungsmaßstab des Objektivs 18 abhängt.

Ist der Abstand der Stützstellen größer als die geforderte Auflösung und/oder die dreidimensionale Struktur aus einer Perspektive nicht erfassbar, so kann das Beleuchtungsmuster 16 entsprechend verschoben werden.

Handelt es sich bei der Messanordnung um eine von Hand zu betätigende Vorrichtung, so kann durch kontinuierliche Bewegung der Messanordnung eine vollständige Erfassung des Objekts 28 erfolgen, wobei die resultierenden Einzelbilder in geeigneter Weise zu einem Gesamtbild zusammengefügt werden.

Da erwähntermaßen in den Löchern 32 des Pinhole-Arrays 30 dann, wenn das Objekt 28 stark streuend ist, nicht nur die Wellenlänge des scharf abgebildeten Fokus abgebildet werden, sondern auch im erheblichen Umfang Weißlicht, müssen Verfahren zur Anwendung gelangen, um den hierdurch bedingten Untergrund zu eliminieren oder zu reduzieren.

Je höher der Anteil des Weißlichtuntergrunds am Messsignal ist, umso genauer muss für die Bestimmung der Lage des für die Wellenlänge des Fokus charakteristischen Peaks der Spektralverlauf des Untergrunds in jedem Messpunkt bekannt sein. Hierbei kann ein Verfahren zur Anwendung gelangen, dass rein prinzipiell durch die Fig. 2 verdeutlicht wird. So weist das Pinhole-Array 30 neben den Löchern 32, in denen die Foki abgebildet werden, weitere Löcher 54 auf, die nicht mit dem Beleuchtungsmuster 14 übereinstimmen. Entsprechend der bevorzugten Anordnung gemäß Fig. 2 liegen die mit dem Beleuchtungsmuster 14 nicht übereinstimmenden Löcher 54 zwischen den dem Beleuchtungsmuster 14 entsprechenden Löchern 32. Die Spektren in den Löchern 54, in denen Foki nicht abgebildet sind, geben sodann ungefähr das Untergrundsignal der benachbarten Löcher 32 wieder, in denen Foki abgebildet sind und somit Messpunkte bilden. Dabei kann alternativ das Messsignal eines einzelnen benachbarten im Grunde nur Weißlicht enthaltenden Lochs 54 als Untergrund oder der Mittelwert über mehrere benachbarte Löcher 54 zur Bestimmung des Untergrunds 52 verwendet werden. Dabei können die Löcher 54 als unbeleuchtete und die Löcher 32 als beleuchtete Löcher oder Pinholes bezeichnet werden.

Entsprechend der Anordnung der beleuchteten oder ersten Löcher 32, in denen Foki abgebildet werden, und der für die Untergrundbestimmung verwendeten zweiten Löcher 54, die auch als unbeleuchtete Löcher zu bezeichnen sind, stehen pro Messpunkt nur noch die Hälfte der Pixel für die spektrale Aufspaltung zur Verfügung, verglichen mit der Variante, bei der die Anzahl der Foki mit der der Pinholes oder Löcher 32 übereinstimmt.

Zur Positionierhilfe und zur Einzelbildzuordnung für eine Gesamtbilderzeugung kann eine Live-Bilderfassung vorgesehen sein. Hierzu ist im Ausführungsbeispiel ein weiterer Kamerachip 62 vorgesehen, auf den das Objekt 28 abgebildet wird. Zusätzlich kann eine weitere Lichtquelle 64 vorgesehen sein, die das Objekt 28 vorzugsweise über die Umlenkeinrichtung 26 bestrahlt. Anstelle einer Lichtquelle 64 können auch mehrere Lichtquellen vorgesehen sein. Für die Live-Bildaufnahme sollte die Lichtquelle 64 Licht in einem Spektralbereich emittieren, der außerhalb des für die eigentliche Messung verwendeten Wellenlängenbereichs liegt. Dadurch sind Live-Bild und Messung unabhängig voneinander möglich.

Zur Strahlteilung kann in den Strahlengang zwischen dem Objektiv 18 und dem ersten Strahlteiler 24 ein zweiter Strahlteiler 66 wie ein dichroitischer Filter verwendet werden, der eine hohe Transmission für das Messsignal und eine hohe Reflexion für das Live-Bildsignal aufweist.

Erwähntermaßen wird für die Abbildung des Objekts 28 auf den Kamerachip 62 gleichfalls das Objektiv 18 verwendet, wobei die axiale Position des Kamerachips 62 so gewählt ist, dass das Live-Bild ungefähr in der Mitte des Messbereichs scharf ist.

Insbesondere bei einer intraoralen Anwendung zur Vermessung von Zähnen ist die Baugröße und Bauform der Messanordnung bzw. des Messgeräts von großer Bedeutung. So können in Ausgestaltung der Erfindung allein das Objektiv 18 und die Strahlumlenkung 26 in einem intraoralen Teil eines Handgeräts angeordnet sein, der in einem Mundraum einführbar ist. Die anderen Komponenten können in einem extraoralen Teil des Handgeräts oder in einer separaten Geräteeinheit integriert sein. Bei kompakter Lichtquelle ist eine Integration in einem Handgerät möglich.

Anstelle der Halogenlampe 10 sind auch andere Lichtquellen wie beispielsweise ein Weißlicht-LED oder mehrere verschiedenfarbige LEDs mit geeigneter Kollimationsoptik denkbar.

Alternativ kann die Lichtquelle 10 in einem externen Gerät integriert sein und das Licht über Fasern in das Handgerät geführt werden, wobei das Auskoppelende des Lichtleiters im Fokus der Kollimatorlinse 12 verläuft.

Zur Erzeugung des multifokalen Beleuchtungsmusters 16 kann anstelle des Mikrolinsen-Arrays 14 oder zusätzlich hierzu auch ein Pinhole-Array verwendet werden, das in der Ebene des in den Fig. dargestellten Beleuchtungsmusters 16 anordbar ist.

Sofern das Objekt 28 nicht durch eine einzelne Aufnahme, sondern durch eine Vielzahl von Aufnahmen, also einzelnen Bildern gemessen bzw. gescannt wird, müssen die einzelnen Bilder eine eindeutige Zuordnung zueinander haben, um eine einfache Auswertung zu ermöglichen. Hierzu ist insbesondere vorgesehen, dass sich die Einzelbilder in Teilen überlappen, die 50 % bis 95 % eines jeden Bilds ausmachen. Alternativ oder ergänzend kann als Hilfsmittel zur Überlagerung der Einzelbilder auch das Einbringen von Fixpunkten auf dem Objekt 28 dienen.

Alternativ zu einer manuellen Verschiebung des erwähntermaßen vorzugsweise als Handgerät ausgebildeten Messgeräts können Stellglieder in der Messanordnung integriert sein, um Messpunkte zu verschieben. Der maximal notwendige Verschiebweg entspricht dabei dem Messpunktabstand abzüglich der gewünschten Auflösung, im erläuterten Ausführungsbeispiel also bei einer gewünschten Auflösung von 225 µm (250 µm Abstand der Löcher - 25 µm Auflösung).

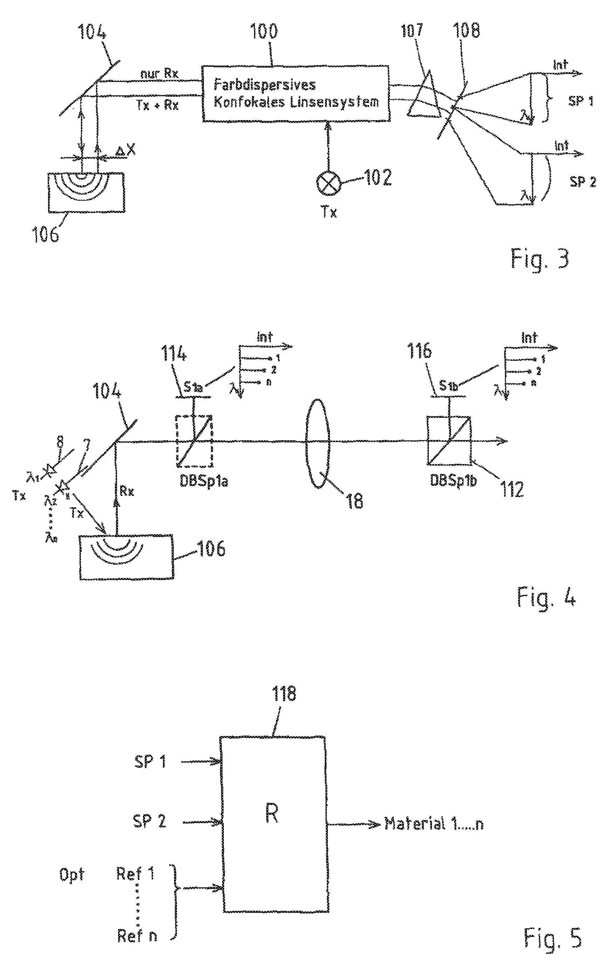

Die anhand der Fig. 1 und 2 prinzipiell erläuterte Messanordnung wird auch zur Bestimmung von Materialeigenschaften des Objekts benutzt, wie rein prinzipiell durch die Fig. 3 verdeutlicht werden soll. Dabei wird das konfokale System umfassend Beleuchtungsmuster 16, Strahlenteiler 24 und das Objektiv 18 mit großer chromatischer Aberration sowie das Lochmuster 30 eingesetzt.

Die Bauelemente werden in der Fig. 3 als farbdispersives konfokales Linsensystem 100 bezeichnet. Die Strahlung wird von einer gegebenenfalls Multipunktlichtquelle TX102 erzeugt. Dem Objektiv 18 kann ggfs. ein Umlenkelement 104 nachgeordnet werden, über das die Strahlung auf das Objekt 106 wie Zahn umgelenkt wird.

Dem farbdispersiven konfokalen Linsensystem 100 ist entsprechend der Fig. 1 eine Anordnung 107 wie Prisma zur spektralen Aufspreizung mit einem Sensor 108 nachgeordnet, auf dem die Spektren des rückreflektierten bzw. gestreuten Lichts des Objekts 106 dargestellt werden. Dabei werden Spektren SP1 der direkt beleuchteten Messpunkte sowie Spektren SP2 auf dem Sensor 108 erzeugt, die nicht über das konfokale System 100 beleuchtet werden. Die entsprechenden Punkte sind um einen Abstand Δx versetzt, der im Bereich zwischen 5 µm und 3 mm, insbesondere im Bereich zwischen 10 µm und 200 µm liegt. Die nicht über das konfokale System beleuchteten Punkte des Objekts 106 und damit die Spektren SP2 sind diejenigen, die von dem Licht erzeugt werden, das in dem Pinhole-Array 30 die für die Untergrundbestimmung benutzten Löcher 54 durchsetzen.

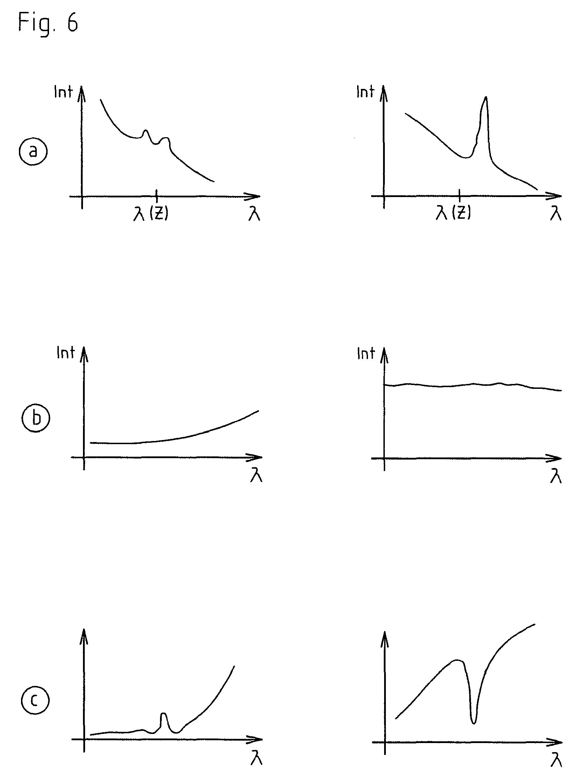

Die Spektren SP1 und SP2 werden sodann mit Daten einer Look-Up Tabelle verrechnet. Zur Generierung der Daten für die Look-Up Tabelle werden bekannte Proben mit dem erfindungsgemäßen System gemessen und die Spektralinformation SP1, SP2 und ggf. weiterer Kanäle z. B. Referenzkanal aus der Life image Optik gespeichert und als Datensatz in der Look-Up Tabelle hinterlegt. Die Daten werden vorzugsweise bereits z-abstandswertkorrigiert hinterlegt. Die Messdaten eines unbekannten Materials werden sodann ebenfalls abstandskorrigiert mit den Datensätzen der Look-Up Tabelle verglichen, beispielsweise mit einem "Best fit" Algorithmus der die kleinsten Fehlerabstandsquadrate pro spektralem Messpunkt berechnet. Zur Kalibrierung des Systems werden die spektralaufgelösten Daten eines Referenzkörpers aus hochdiffus streuendem Material wie Titanoxiden oder Spektralon verwendet, wie dies anhand der Fig. 6 bis 8 erläutert wird.

Der Unterschied zwischen den korrespondierenden Spektren SP1 und SP2 liegt im Nichtvorhandensein eines Fresnelreflexes im Spektrum SP2 und des höheren Anteils an Volumeninformation im Falle eines semitransluzenten Objektes.

Das Spektrum SP2 enthält also mehr Information über tiefere Materialbereiche als das Spektrum SP1. Das Spektrum SP2 kann einzeln jedoch auch stellvertretend für eine Vielzahl solcher korrespondierender Messpunkte stehen.

Das Spektrum SP1 liefert dagegen auch Information, wenn es sich um ein Material mit sehr geringer Eindringtiefe handelt, da das Remissionssignal aus der nächsten Umgebung ausgewertet wird.

Somit ergeben sich interessante Auswertemöglichkeiten beim Vergleich beider Spektren. Beispielsweise erzeugt eine glatte Metallobeifläche ein intensives Spektrum SP1, bei senkrechter Lage der Oberfläche zur Blickrichtung mit Fresnelreflex. Im Spektrum SP2 ist die Intensität dann idealerweise Null.

Im Falle eines semitransluzenten Materials mit diffus streuender Oberfläche enthält das Spektrum SP1 hauptsächlich Materialoberflächeninformation, das Spektrum SP2 ist sodann jedoch nicht null, sondern enthält Information durch im Objekt gestreutes Licht, das Rückschlüsse auf die optischen Materialeigenschaften zulässt. Die Differenz der Spektren SP1 -SP2 lässt somit Rückschlüsse auf das Absorptions- und Streuverhalten des Materials und somit eine Materialdifferenzierung zu.

Bei glatter Materialoberfläche (z. B. Gewebe mit Flüssigkeitsfilm) kann ein auftretender Frenselreflex stören. Da dieser aber nur unter einem bestimmten Blickwinkel auftritt, kann er erkannt und getrennt behandelt werde, da bei Auftreten des Fresnelreflexes eine Übersteuerung des Sensors erfolgen kann.

Durch die konfokale Bedingung und der farbdispersiven Optik dominiert bei jeder Z-Tiefe ein schmaler Wellenlängenbereich; andere Wellenlängenbereiche werden unterdrückt. Bei bekannter Z-Tiefe der 3D-Messung kann, da das Verhalten der konfokalen Optik bekannt ist, dieser Effekt heraus gerechnet werden. Allerdings führt diese für die Tiefenmessung essentielle Eigenschaft bei der Bewertung der Materialeigenschaften zu einer Verschlechterung des Signal-Rauschverhältnisses in den unterdrückten Wellenlängenbereichen bzw. zu einer Einschränkung des nutzbaren Spektralbereichs.

Durch Kombination mehrerer Frames für den gleichen Messpunkt, allerdings in unterschiedlichen Abständen aufgenommen, lässt sich dies jedoch ausgleichen.

Der Sensor 108 kann ein Flächen- oder Mehrfachzeilensensor sein, basierend auf CMOS-, CCD-Technologie mit den Materialien Si, Ge enhanced Si oder InGaAs.

Der Fig. 4 ist eine bevorzugte Weiterbildung der erfindungsgemäßen Messanordnung zu entnehmen. So kann unter Ausnutzung des Prinzips der in Fig. 1 beschriebenen Live-Bild-Erzeugung eine weitere Messung des Objekts 106 zur Bestimmung von Materialeigenschaften durchgeführt werden. Das Objekt 106 kann über Lichtquellen TXλ1, λ2 ... λn unter einem von der Detektionsrichtung RX unterschiedlichen Winkel mit Licht beaufschlagt werden, das in einem Wellenlängenbereich Δλ2 liegt, der vorzugsweise nicht mit demjenigen übereinstimmt, in dem die Messung gemäß Fig. 3 durchgeführt wird, also die 3D-Messung. In diesem Fall kann über einen dichroitischen Beamsplitter 110 oder einem zwischen dem Objektiv 18 und dem Strahlenteiler 24 angeordneten Beamsplitter 112 die interessierenden Wellenlängen (n) auf einen weiteren Sensor 114 bzw. 116 gelenkt werden. Hierbei kann es sich um den zur Ermittlung des Live-Bildes benutzten Sensor 62 in Fig. 1 handeln. Bevorzugterweise wird die Anordnung aus dichroitischem Beamsplitter 110 und Sensor 114 benutzt, da die farbdispersive Optik 18 nicht benötigt wird. Verwendet man mehrere Wellenlängen λ1, λ2 ... λn sequenziell, kann mit einem monochronen Sensor ein diskretes Spektrum DSp3 bzw. DSp4 aufgenommen werden, das Informationen über die optischen Eigenschaften des Messobjekts 106, vorzugsweise außerhalb des für die 3D-Messung verwendeten Wellenlängenbereichs enthält.

Die Sensoren 114 bis 116 werden in Bezug auf ihre Pixel pixelgenau oder nahezu pixelgenau auf die Pixel des Sensor 108 zugeordnet, so dass sich für jeden Messpunkt, der gemäß der Anordnung nach Fig. 3 ermittelt wird, Informationen im erweiterten Wellenlängenbereich hinzufügen lassen, die beispielsweise als Intensitätsreferenzen genutzt werden können.

Der Fig. 5 ist ein Materialklassifikator 118 zu entnehmen, der gespeist mit den Spektralinformationen der Spektren SP1, SP2 aus Fig. 3 und den diskreten Spektrallinien DSp3 oder DSp4 aus Fig. 4 aus einem Frame oder mehreren Frames, die den gleichen Messpunkt in unterschiedlichen Ansichten und zu unterschiedlichen Zeiten zeigen, eine Materialzuordnung errechnet. Dabei wird im Klassifikator R ein "Best fit" zu einem der in der Look-Up Tabelle hinterlegten Datensätze einer Material Probe (z. B. Zahnschmelz oder Zahnfleisch oder auch ein Füllungsmaterial z.B. Amalgam oder Gold) errechnet. Die Spektren SP1 und SP2 werden sodann mit Daten einer Look-Up Tabelle verrechnet. Zur Generierung der Daten für die Look-up Tabelle werden bekannte Proben mit dem erfindungsgemäßen System gemessen und die Spektralinformation SP1, SP2 und ggf. weiterer Kanäle z. B. Referenzkanal aus der Life Image Optik gespeichert und als Datensatz in der Look-Up Tabelle hinterlegt. Die Daten werden vorzugsweise bereits z-abstandswertkorrigiert hinterlegt. Die Messdaten eines unbekannten Materials werden sodann ebenfalls abstandskorrigiert mit den Datensätzen der Look-Up Tabelle verglichen, beispielsweise mit einem "Best fit" Algorithmus der die kleinsten Fehlerabstandsquadrate pro spektralem Messpunkt berechnet. Zur Kalibrierung des Systems werden die spektralaufgelösten Daten eines Referenzkörpers aus hochdiffus streuendem Material wie Titanoxiden oder Spektralon verwendet. Falls Referenzkanäle genutzt werden, können diese zusätzlich genutzt werden (Ref 1 ... Ref n). Bei Vorliegen eines oder mehrerer additiven/r, nicht konfokalen/r Referenzkanals /- kanäle, beispielsweise für die Realisierung eines Live-Bilds während der 3D-Vermessung, kann /können diese(r) in der Bestimmung des Materials aus den optischen Eigenschaften mit verwendet werden.

Anhand von der Fig. 6 zu entnehmenden Spektren soll verdeutlicht werden, wie Spektren abstandskorrigiert kalibriert werden, um diese sodann mit in Look-Up Tabellen abgelegten Spektren, die Rückschlüsse auf Materialeigenschaften ermöglichen, vergleichen zu können.

Anhand der Fig. 6 wird prinzipiell eine Systemkalibrierung erläutert. So geben die Spektren in Fig. 6a) ein Untergrundspektrum (linke Darstellung) und ein Messspektrum (rechte Darstellung) rein prinzipiell wieder, die in einem bestimmten Abstand Z zu einem zu messenden Punkt aufgenommen werden, wobei die erfindungsgemäße Anordnung mit dem Pinhole-Array 30 benutzt wird, das die Löcher 32, in denen die Foki abgebildet werden, und die Löcher 54 aufweist, die mit dem Beleuchtungsmuster 14 nicht übereinstimmen. Das Untergrundspektrum wird mittels der Strahlung gemessen, die zumindest eines der Löcher 54 durchsetzt. Das Messspektrum wird von einer Strahlung gemessen, die eines der Löcher 32 durchsetzt, das benachbart zu dem oder den Löchern ist, über die die Untergrundstrahlung ermittelt wird. Gemessen wird dabei an einem Testkörper. Man erkennt in der rechten Darstellung von Fig. 6a) einen Peak für eine bestimmte Wellenlänge, der abstandsabhängig (Z-abhängig) ist. Tatsächlich würde jedoch das Messspektrum des Testkörpers ohne den erfindungsgemäßen konfokalen Messaufbau, also bei reiner Remissionsmessung in Abhängigkeit von der Wellenlänge λ einen Verlauf entsprechend der Fig. 6b), rechte Darstellung, aufweisen. Dabei wird als Testkörper z. B. Spektralon verwendet, das im Messsignal einen glatten geraden Verlauf aufweist, da Spektralon bei allen Wellenlängen im sichtbaren Spektralbereich etwa gleichgut reflektiert.

Somit muss das tatsächlich gemessene Spektrum des Referenzkörpers (Fig. 6a), rechte Darstellung) mit einem Korrekturfaktor versehen werden, um einen Verlauf zu erreichen, der dem Verlauf gem. Fig. 6b), rechte Darstellung, entspricht. Der Korrekturfaktor (c = b : a) wird in Fig. 6c), rechte Darstellung, wiedergegeben. Unter Berücksichtigung des Korrekturfaktors wird somit das tatsächliche Messspektrum (Fig. 6a, rechte Darstellung) in das Spektrum 6b), rechte Darstellung, überführt.

Somit erhält man einen Korrekturdatensatz, der den Einfluss des konfokalen Messsystems kompensiert.

Entsprechendes gilt für die Untergrundmessergebnisse, die durch die linken Spektren der Fig. 6a), b) und c) repräsentiert werden.

Entsprechende Spektren werden für eine Vielzahl von Abständen Z zwischen Z = 0 und Z = Z_{MAX} gemessen, so dass ein ganzes Set von Spektren bei verschiedenen Tiefen (Abständen Z) gespeichert und die Korrekturfaktoren C über λ berechnet und gespeichert werden.

Diese Korrekturfaktoren können sodann auf Spektren beliebiger Körper (Objekte) wie Zahn, Füllungsmaterial, Gewebe etc. angewandt werden, so dass man die Remissionsspektren zu den Materialien erhält, die sodann mit hinterlegten (Look-Up Tabellen) Testspektren verglichen werden, um eine Materialklassifikation vorzunehmen, wobei beim Vergleich z.B. kleinste Fehlerquadrate zu dem Testspektrum und gemessenem Spektrum berücksichtigt werden.

Da ein entsprechender Datensatz, der eine Vielzahl von Messungen für verschiedene Abstände pro Messpunkt umfasst, erhebliche Redundanzen enthält, kann man Teile der Spektren, die ein geringes Signal zu Rauschverhältnissen aufweisen, verwerfen und lediglich die Bereiche nahe den Signalpeaks nutzen.

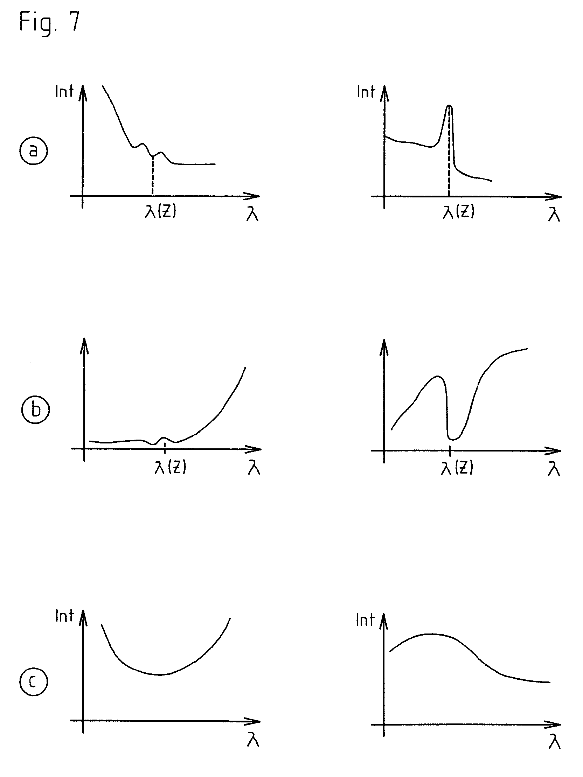

Der Fig. 7 sind beispielhaft Spektren zu entnehmen, die von einem zu messenden Objekt in einem bestimmten Abstand Z aufgenommen worden sind, um sodann die korrigierten Spektren mit abgespeicherten Spektren (Look-Up Tabellen) zu vergleichen und Rückschlüsse in Bezug auf die Materialeigenschaften erzielen zu können.

So ist in Fig. 7a), rechte Darstellung, ein Messspektrum für einen Zahn als Objekt dargestellt. Die linke Darstellung in Fig. 7a) gibt das Untergrundspektrum beim gleichen Abstand Z wieder.

Entsprechend den Erläuterungen gem. Fig. 6 werden die gemessenen Spektren 7a) mit den Korrekturfaktoren gem. Fig. 6c), die den Spektren 7b) entsprechen, korrigiert, um sodann korrigierte Spektren des Zahns gem. Fig. 7c) zu erhalten. Die entsprechenden Spektren werden sodann mit vorher abgelegten Spektren verglichen. Entsprechende Messungen erfolgen entsprechend der erfindungsgemäßen Lehre für ein und denselben Messpunkt in verschiedenen Abständen der erfindungsgemäßen Messanordnung.

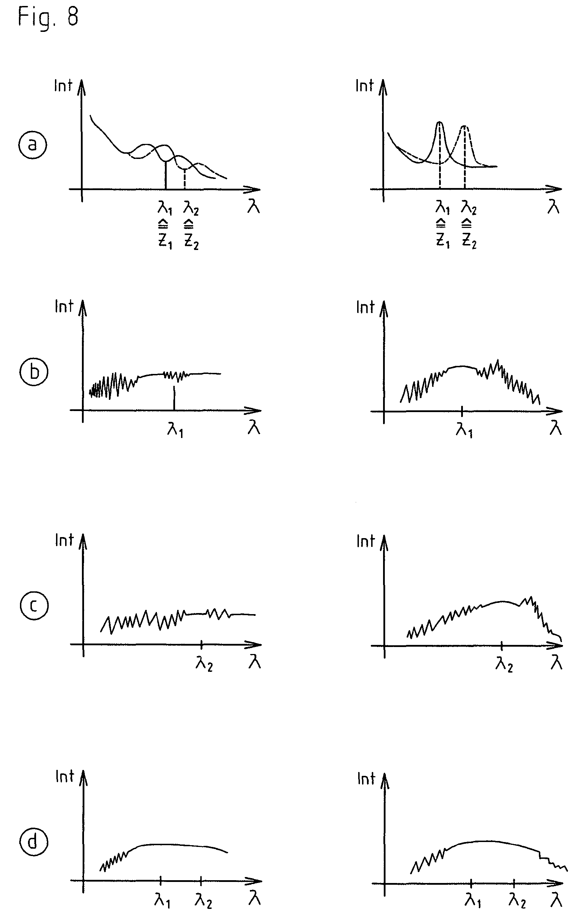

Fig. 8 soll rein prinzipiell verdeutlichen, dass die Messspektren und Untergrundspektren sich in Abhängigkeit vom Abstand ändern, da die konfokale Bedingung in Abhängigkeit des Abstands zum Messpunkt jeweils für bestimmte Wellenlängen erfüllt ist und somit die Peaks wellenlängenabhängig auftreten. Dies soll anhand der Fig. 8a) verdeutlicht werden. So ist eine erste Messkurve beim Abstand Z₁ und eine zweite Messkurve beim Abstand Z₂ aufgenommen worden, wobei die Peaks bei unterschiedlichen Wellenlängen λ₁ und λ₂ auftreten.

In Fig. 8b) sind die Untergrundmessung (linke Darstellung) und das Messspektrum (rechte Darstellung) in Bezug auf den Abstand Z₁ korrigiert, wobei ein Korrekturfaktor entsprechend den Erläuterungen zu Fig. 6 berücksichtigt wurde. In Fig. 8c) ist das korrigierte Messspektrum (rechte Darstellung) bzw. das korrigierte Untergrund spektrum für den Abstand Z₂ dargestellt. Wird ein Binning in Bezug auf die benachbarten Wellenlängen λ₁, λ₂ durchgeführt, erfolgt eine Rauschreduzierung, wie die Fig. 8d) verdeutlicht.

Sowohl aus den Messspektren (rechte Darstellung) als auch aus den Untergrundspektren (linke Darstellung in den Figuren) können bei einem Vergleich mit abgelegten Referenzspektren (Look-Up Tabelle) Rückschlüsse auf Materialeigenschaften gezogen werden.

Aus dem gemessen Peak des Messspektrums können z. B. Aussagen über die Oberflächenglattheit des Objekts und aus dem Untergrundspektrum insbesondere Tiefeninformationen des Objekts abgeleitet werden, wobei aufgrund der Messung eines Objektpunkts in unterschiedlichen Abständen der Messanordnung die Materialeigenschaften wellenlängenabhängig ermittelt werden.

Insbesondere können aus den Messspektren Materialeigenschaften in Bezug auf Oberflächenrauigkeit bzw. Glattheit, Brechungsindex und Absorptionsverhalten und aus den Untergrundspektren Materialcharakteristika wie Streuung und Absorption abgeleitet werden.

Vorzugsweise erfolgt die Berechnung "real time" oder nahezu "real time" in einem FPGA (Field Programmable Gate Array), um die CPU des Hauptrechners nicht zu belasten. Real time Klassifizierung ist möglich, falls die notwendige Information in einem einzelnen Frame enthalten ist. Muss man jedoch auf weitere Frames warten, die beispielsweise einen selten auftretenden Fresnelreflex enthalten können, kann die endgültige Auswertung erst nach Eintreffen dieser Information erfolgen. Ist der zeitliche Abstand klein, z. B. 30 FPS (Frames Per Second), ist die Information meistens in Bereichen weniger Sekunden verfügbar.

Die Materialinformation kann sodann überlagert über die 3D-Information, z. B. mittels unterschiedlicher Einfärbung der Messpunkte, im GUI (Graphical User Interface) angezeigt werden und/oder zu selektiver Behandlung des gescannten Objekts entsprechend des Materials genutzt werden. Im Falle einer zahnmedizinischen Anwendung kann so der Übergang von Zahnhartsubstanz zu Weichgewebe, Watterollen oder Retraktionsfaden klar bestimmt werden. Es können geometrievariante Teile aus Weichgewebe vor der Registrierung einzelner Frames eliminiert werden. Auch können Füllungsmaterialen oder Karies von gesunder Zahnhartsubstanz unterschieden werden. Zudem kann eine 3D-Zahnfarbbestimmung inklusive der Bestimmung der optischen Eigenschaften µa, µs und g durchgeführt werden.

## Patentansprüche

1. Verfahren zum Ermitteln von Materialcharakteristika eines Objekts, die optische Eigenschaften des Objekts sind und ermittelt werden, indem mit einem konfokalen 3D-Messsystem spektral aufgelöste Messdaten des Objekts ermittelt werden,
**dadurch gekennzeichnet,**
**dass** ein konfokales farbdispersives 3D-Messsystem verwendet wird, und
**dass** die mit dem konfokalen 3D-Messsystem ermittelten spektral aufgelösten Messdaten des Objekts mit spektral aufgelösten Daten eines Referenzkörpers verrechnet werden, wobei von gleichen Messpunkten mehrere spektral aufgelöste Daten ermittelt werden, indem das 3D-Messsystem in voneinander abweichenden Abständen zum Objekt von dem Messpunkt Spektren aufnimmt und speichert und die gemessenen spektral aufgelösten Daten des Messpunktes mit einem Korrekturfaktor beaufschlagt werden, der aus Spektren des Referenzkörpers ermittelt wird, dessen Remission ohne konfokale Messbedingungen gemessen wird oder dessen Spektren einer in einem Rechner abgelegten Bibliothek entnommen werden, wobei die Messspektren unter Berücksichtigung des Korrekturfaktors mit in Look-Up Tabellen abgelegten Spektren verglichen werden, die repräsentativ für Materialcharakteristika sind.

2. Verfahren nach Anspruch 1,
**dadurch gekennzeichnet,**
**dass** zur Ermittlung von Materialcharakteristika sowohl spektral aufgelöste Daten einer direkt remittierten ersten Strahlung von auf dem Objekt abgebildeten Foki eines multifokalen Beleuchtungsmusters als auch im Abstand Δx vom jeweiligen abgebildeten Fokus diffus remittierte zweite Strahlung gemessen wird.

3. Verfahren nach Anspruch 1 oder 2,
**dadurch gekennzeichnet,**
**dass** der Abstand zwischen einer einem Fokus zugeordneten direkt remittiertern ersten Strahlung und einer diffus remittierten zweiten Strahlung zwischen 5 µm und 3 mm, insbesondere zwischen 10 µm und 200 µm liegt.

4. Verfahren nach zumindest einem der vorhergehenden Ansprüche,
**dadurch gekennzeichnet,**
**dass** zur Ermittlung der spektral aufgelösten Daten das Objekt mittels der 3D-Messanordnung mit einer ersten Strahlung beaufschlagt wird, die im Wellenlängenbereich Δλ1 liegt, dass das Objekt mit einer zweiten Strahlung in einem Wellenlängenbereich Δλ2 beaufschlagt wird und dass aus vom Objekt remittierter zweiter Strahlung ein 2D-Bild des Objekts ermittelt wird.

5. Verfahren nach zumindest einem der vorhergehenden Ansprüche,
**dadurch gekennzeichnet,**
**dass** das 3D-Bild mit einem ersten Sensor mit Ortskoordinaten des Objekts zuzuordnenden ersten Pixeln und das 2D-Bild mit einem zweiten Sensor mit Ortskoordinaten des Objekts zuzuordnenden zweiten Pixeln gemessen wird und dass die ersten und zweiten Pixel einander zugeordnet werden.

6. Verfahren nach zumindest einem der vorhergehenden Ansprüche,
**dadurch gekennzeichnet,**
**dass** mittels der mit dem ersten Sensor ermittelten Spektralinformationen und der mit dem zweiten Sensor ermittelten Spektralinformationen aus einem oder mehreren Frames, die den gleichen Messpunkt in unterschiedlichen Ansichten und/oder zu unterschiedlichen Zeiten zeigen, eine Materialzuordnung errechnet wird.

7. Verfahren nach zumindest einem der vorhergehenden Ansprüche,
**dadurch gekennzeichnet,**
**dass** sowohl aus einem unter konfokalen Bedingungen ermittelten Messspektrum eines Messpunkts als auch aus einem Untergrundspektrum in einem Bereich des Messpunkts Materialcharakteristika ermittelt werden.

## Claims

1. Method for ascertaining material characteristics of an object which are optical properties of such object and are determined using a confocal 3D measuring system to determine spectrally resolved measurement data of the object,
**characterized in that,**
a confocal color-dispersing 3D measuring system is used and
the spectrally resolved data of the object obtained using the confocal 3D measuring system, are computed with the spectrally resolved data of a reference body, wherein from same measurement points several spectrally resolved data is determined, whereby the 3D measuring system is taking and storing spectra of the measurement point at different varying distances from the object and that to the measured spectrally resolved data of the measurement point a correction factor is applied which is determined from the spectra of the reference body, the remission of which is not measured under confocal measurement conditions or the spectra of which are taken from a library stored in a computer, wherein the measuring spectra are compared with material characteristic representative spectra stored in look-up tables under consideration of the correction factor.

2. The method of claim 1,
**characterized in that,**
for ascertaining material characteristics, both spectrally dispersed data of a first radiation directly reflected from foci of a multi focal illumination pattern imaged on the object as well as a second radiation diffusely reflected at a distance Δx from the respective imaged focus are measured.

3. The method of claim 1 or 2,
**characterized in that,**
the distance between a directly reflected radiation assigned to a focus and a diffusely reflected second radiation is between 5 µm und 3 mm, in particular between 10 µm und 200 µm.

4. The method of at least one of the preceding claims,
**characterized in that,**
for determining the spectrally resolved data, the object is illuminated by means of the 3D measuring system with a first radiation in a wavelength region Δλ1, that the object is illuminated with a second radiation in a wavelength region Δλ2, and that a 2D image of the object is generated from the second radiation reflected by the object.

5. The method of at least one of the preceding claims,
**characterized in that,**
the 3D image is measured using a first sensor with first pixels to be assigned to spatial coordinates of the object and the 2D image is measured with a second sensor with second pixels to be assigned to spatial coordinates of the object, and that the first pixels and the second pixels are assigned to each other.

6. The method of at least one of the preceding claims,
**characterized in that,**
by means of the spectral information determined using the first sensor and the spectral information determined using the second sensor, one or several frames that show the same test point from different points of view and/or at different points in time are used to compute a material classification.

7. The method of at least one of the preceding claims,
**characterized in that,**
material characteristics are determined from both a measured spectrum of a test point obtained under confocal conditions as well as from a background spectrum in the region of the test point.

## Revendications

1. Procédé de détermination de caractéristiques matérielles d'un objet, ces dernières étant des propriétés optiques de l'objet et déterminées grâce au traitement des données de mesure à résolution spectrale dudit objet à l'aide d'un système de mesure confocal 3D,
**caractérisé en ce**
**qu'**un système de mesure confocal 3D à dispersion de couleur est employé et que les données de mesures à résolution spectrale dudit objet et déterminées à l'aide du système de mesure confocal 3D sont calculées à l'aide de données à résolution spectrale d'un corps de référence, sachant que plusieurs données à résolution spectrale sont déterminées pour les mêmes points de mesure, sachant que le système de mesure 3D enregistre du point de mesure des spectres à des distances divergentes de l'objet et les sauvegarde, et qu'un facteur de correction est appliqué aux données à résolution spectrale du point de mesure qui ont été mesurées, ledit facteur étant déterminé à partir des spectres du corps de référence, dont la réflectance est mesurée sans conditions de mesure confocales ou dont les spectres ont été extraits d'une bibliothèque stockée dans un ordinateur, sachant que les spectres de mesure ont été comparés en tenant compte dudit facteur de correction à des spectres stockés dans des tables de correspondance qui sont représentatifs des caractéristiques matérielles.

2. Procédé selon la revendication 1,
**caractérisé en ce**
**que**, pour déterminer les caractéristiques matérielles, il est possible de mesurer aussi bien des données à résolution spectrale d'un premier rayonnement - réémis directement - de foyers d'un modèle d'éclairage multifocal représentés sur l'objet, que d'un second rayonnement réémis de manière diffuse à distance Δx du foyer respectivement représenté.

3. Procédé selon la revendication 1 ou 2,
**caractérisé en ce**
**que** la distance entre un premier rayonnement réémis directement et associé à un foyer, et un second rayonnement réémis de manière diffuse se situe entre 5 µm et 3 mm, en particulier entre 10 µm et 200 µm.

4. Procédé selon au moins l'une des revendications précédentes,
**caractérisé en ce**
**que** pour déterminer les données à résolution spectrale, l'objet est exposé à l'aide du dispositif de mesure 3D à un premier rayonnement se situant dans une plage de longueurs d'ondes Δλ1, que l'objet est exposé à un second rayonnement dans une plage de longueurs d'ondes Δλ2 et qu'une image 2D de l'objet est déterminée à partir d'un second rayonnement réémis par l'objet.

5. Procédé selon au moins l'une des revendications précédentes,
**caractérisé en ce**
**que** l'image 3D est mesurée par un premier capteur avec les premiers pixels pouvant être attribués aux coordonnées géométriques de l'objet et que l'image 2D est mesurée par un second capteur avec les seconds pixels pouvant être attribués aux coordonnées géométriques de l'objet et que les premiers et les seconds pixels sont associés les uns aux autres.

6. Procédé selon au moins l'une des revendications précédentes,
**caractérisé en ce**
**que** l'attribution du matériau est calculée à l'aide des informations spectrales déterminées par le premier capteur et des informations spectrales déterminées par le second capteur à partir d'une ou de plusieurs trames de données qui représentent le même point de mesure dans des vues différentes et/ou à des instants différents.

7. Procédé selon au moins l'une des revendications précédentes,
**caractérisé en ce**
**que** les caractéristiques matérielles sont déterminées aussi bien à partir d'un spectre de mesure d'un point de mesure déterminé dans des conditions confocales, qu'à partir d'un spectre de fond dans une région du point de mesure.
